Europäisches Patentamt

European Patent Office

Office européen des brevets

(19)

(11) Veröffentlichungsnummer: **0 254 657 B1**

# EUROPÄISCHE PATENTSCHRIFT

(12)

(45) Veröffentlichungstag der Patentschrift: **28.08.91**

(51) Int. Cl.⁵: **A01D  34/70**

(21) Anmeldenummer: **87440045.0**

(22) Anmeldetag: **23.07.87**

(54) **Rasenmäher mit Fahrersitz.**

(30) Priorität: **25.07.86 FR 8611158**
**26.06.87 FR 8709186**

(43) Veröffentlichungstag der Anmeldung:
**27.01.88 Patentblatt  88/04**

(45) Bekanntmachung des Hinweises auf die
Patenterteilung:
**28.08.91 Patentblatt  91/35**

(84) Benannte Vertragsstaaten:
**AT BE CH DE ES FR GB IT LI LU NL SE**

(56) Entgegenhaltungen:
**EP-A- 0 155 437         CH-A- 284 284**
**FR-A- 2 040 771         GB-A- 2 140 265**
**US-A- 2 071 872         US-A- 3 969 876**

(73) Patentinhaber: **ETESIA (Société en Commandite Simple)**
**13 rue de l'Industrie**
**F-67160 WISSEMBOURG(FR)**

(72) Erfinder: **Der Erfinder hat auf seine Nennung verzichtet**

(74) Vertreter: **Nuss, Pierre et al**
**10, rue Jacques Kablé**
**F-67000 Strasbourg(FR)**

## Beschreibung

Die vorliegende Erfindung bezieht sich auf den Bereich der Rasenmäher, insbesondere der Mäher mit Fahrersitz, und hat einen solchen Mäher zum Gegenstand.

Im allgemeinen besitzen Mäher dieser Art eine grössere Schnittbreite und sind deshalb mit mehreren identischen, sich in die gleiche Richtung drehenden Schnittmessern ausgestattet oder sie sind mit gegenläufig drehenden Schneiden, oder auch mit einem einzigen Schnittmesser oder mit einem Hauptschnittmesser, das mit Nebenschnittmessern zusammenwirkt, versehen.

Die Mäher mit in gleiche Richtung drehenden Messern weisen meistens eine seitliche Auswurfvorrichtung auf, mit welcher das geschnittene Gras über eine Schneide hinweg zur nächsten Schneide weiterbefördert wird. Diese Rasenmäher sind jedoch für das direkte Aufnehmen von Gras ungeeignet und erlauben nur eine mittelmässige Schnittqualität von mittelhohem und hohem Gras.

Die Mäher mit gegenläufig drehenden Messern haben meistens einen rückwärtigen, zentrischen Auswurf und sind zur Befestigung einer direkten Sammelvorrichtung ungeeignet, weil der Auswurfkanal, im allgemeinen durch die Bauweise des Mähers bedingt, zu niedrig ist, und der Platz für das direkte Anbringen eines Grasfangbehälters nicht vorhanden ist.

Schliesslich sind die Rasenmäher nach Art derer mit einem einzigen Schnittmesser oder einer Hauptschneide, die mit Nebenschneiden zusammenwirkt, im allgemeinen mit einem Rohr oder einem Kanal für die Weiterbeförderung des Grasschnitts, zu einem hinten am Mäher befestigten Sammelbehälter ausgestattet. Diese Ausführung benötigt jedoch ein starkes Gebläse für die Weiterbeförderung des Grasschnitts, was einen hohen Schallpegel nach sich zieht. Ausserdem erlauben diese bekannten Mäher nur ein einwandfreies Aufnehmen von kurzgeschnittenem und trockenem Gras, und verstopfen leicht bei grossem Grasvolumen.

Ferner weisen alle bekannten Rasenmäher mit Fahrersitz im allgemeinen eine Hinterachse auf, die in der Achse der Räder angeordnet ist und jede Anbringung eines Grasfangkorbes an dieser Stelle verhindert.

Durch CH-A-0 284 284 ist es bekannt Antriebs-Hinterräder auf eine Hinterachsbrücke in Form eines Portalrahmens zu montieren, sodass der Raum zwischen den beiden Antriebs-Hinterrädern frei wird. Diese Schrift beschreibt jedoch einen Traktor mit Portalrahmen zur Bearbeitung von höher wachsenden und in Reihen angeordneten Kulturen.

EP-A-0 155 437 beschreibt einen Rasenmäher mit Fahrersitz bei dem der Grasschnitt durch einen Auswurfkanal in einen Sammelbehälter direkt hinter den Hinterrädern geleitet wird. In dieser Ausführung muss das Gras über die Hinterachse gefördert werden, was schnell zu Verstopfungen des Auswurfkanals führt.

Durch die Lehre dieser beiden Schriften ist es nicht bekannt einen Rasenmäher herzustellen, bei dem der Sammelbehälter soweit wie möglich in den Auswurfkanal reichen kann um eine Verstopfung dieses letzteren zu vermeiden.

Aufgabe der vorliegenden Erfindung ist es, diesen Nachteilen abzuhelfen.

Sie hat daher einen Rasenmäher mit Fahrersitz zum Gegenstand, im wesentlichen bestehend aus einem tragenden Chassis, das vorne mit einem Antriebsmotor, Leit-Vorderrädern, Antriebs-Hinterrädern, die auf eine Hinterachsbrücke in Form eines Portalrahmens montiert sind und einem an der Unterseite befindlichen Mähwerkgehäuse versehen ist, in welchem zwei gegenläufige, synchronisierte Schnittmesser angeordnet sind, dadurch gekennzeichnet, dass die Hinterachsbrücke die Befestigung eines Sammelbehälters zur Aufnahme des Grasschnitts, direkt an der Austrittsöffnung des Auswurfkanals des Mähwerkgehäuses zwischen den Hinterrädern ermöglicht, dass das Mähwerkgehäuse so unter das Chassis bei den Hinterrädern montiert ist, dass die Austrittsöffnung ihres Auswurfkanals sich vollständig in den durch den Abstand der Befestigungsschenkel der Räder bestimmten, freien Raum der Hinterachsbrücke erstreckt und dass der Sammelbehälter ein offenes Vorderteil aufweist, dessen Querschnitt dem Durchgangsquerschnitt zwischen den Schenkeln der Brücke in Form eines Portalrahmens entspricht, und sich an die Austrittsöffnung des Auswurfkanals des Mähwerkgehäuses, in unmittelbarer Nähe des Umlaufweges der Schnittmesser anpasst.

Desweiteren ist es möglich, die Verwendbarkeit des Rasenmähers mit Fahrersitz zu erweitern, indem der Raum zwischen den Hinterrädern, anstelle des Grassammelbehälters, durch Zusatzgeräte wie z.B. eine Grasableitvorrichtung, eine Transportmulde, einen Düngerstreuer, ein Spritzgerät usw. genutzt wird.

Die Aufhängung dieser Zusatzgeräte ist so angeordnet, dass der Schwerpunkt der beförderten Last unmittelbar auf die Antriebsräder einwirkt. Die Bodenhaftung bzw. Griffigkeit der Reifen wird somit erhöht bei zunehmender Last, im Gegensatz zu den bekannten Einrichtungen.

Die Erfindung wird an Hand der nachfolgenden Beschreibung am Beispiel einer bevorzugten Ausführungsform erläutert, das hiermit jedoch nicht eingeschränkt ist, und mit Hinweis auf die beigefügten Schemazeichnungen erklärt. Hierbei zeigen :

Figur 1 eine Seitenansicht eines erfindungsgemässen Rasenmähers mit einem Sammelbehälter

Figur 2 eine Rückansicht des Rasenmähers ohne Sammelbehälter

Figur 3 eine Ansicht analog der von Figur 1, welche einen Sammelbehälter zur Aufnahme des Grasschnitts in Entleerposition darstellt

Figur 4 eine Ansicht analog der von Figur 1, welche anstelle des Sammelbehälters eine Transportmulde darstellt.

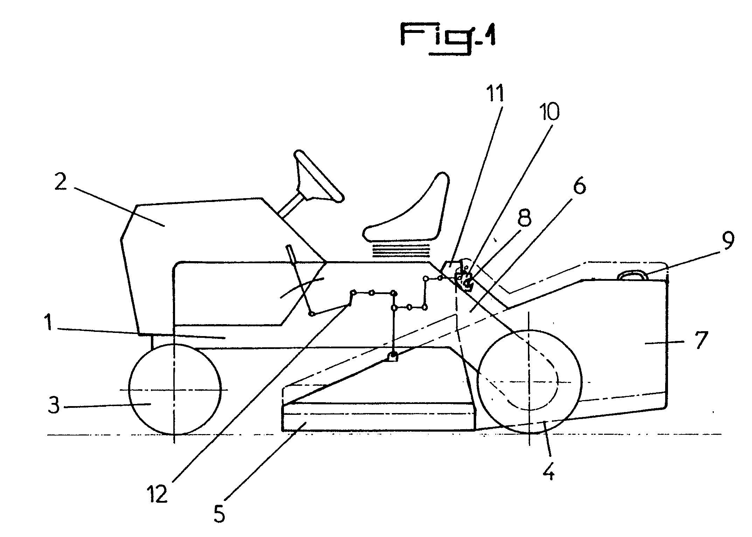

Gemäss der Erfindung, und wie es beispielsweise im einzelnen die Figur 1 der beigefügten Zeichnungen zeigt, ist der Rasenmäher mit Fahrersitz, im wesentlichen bestehend aus einem tragenden Chassis 1, das vorne mit einem Antriebsmotor 2, Leit-Vorderrädern 3, Antriebs-Hinterrädern 4, und einem Mähwerkgehäuse 5 versehen ist, in welchem zwei gegenläufige, synchronisierte Schnittmesser angeordnet sind, dadurch gekennzeichnet, dass die Antriebs-Hinterräder auf eine Hinterachsbrücke 6 in Form eines Portalrahmens montiert sind, der die Befestigung eines Sammelbehälters 7 zur Aufnahme des Grasschnitts, direkt an der Austrittsöffnung des Auswurfkanals des Mähwerkgehäuses 5 zwischen den Hinterrädern 4 ermöglicht.

Ein weiteres Merkmal der Erfindung ist, dass anstelle des Sammelbehälters 7 Zusatzgeräte wie z.B. eine Grasableitvorrichtung, eine Transportmulde 13, ein Düngerstreuer, ein Spritzgerät, usw., mittels Drehlager 14, so angeordnet werden können, dass der Schwerpunkt der beförderten Last unmittelbar auf die Hinterräder bzw. Antriebsräder 4 einwirkt.

Die Hinterräder 4 sind voneinander unabhängige Räder, die jeweils einzeln auf bekannte Weise mit Hilfe eines Differentials angetrieben werden, das in der oberen Traverse der Brücke untergebracht ist, und dessen Abtriebswellen die Naben der Räder 4 jeweils mittels eines Satzes Ritzel-Kette, der in dem Schenkel des Portalrahmens sitzt, antreiben.

Ein derartiges Getriebe ist hinlänglich bekannt und auf den beigefügten Zeichnungen nicht im einzelnen dargestellt.

Die Konstruktion der Brücke 6 ermöglicht es, einen beträchtlichen Zwischenraum in Höhe der Achse der Räder 4 freizulassen.

Das Mähwerkgehäuse 5 ist so unter das Chassis 1 bei den Hinterrädern 4 montiert, dass die Austrittsöffnung seines Auswurfkanals sich vollständig in den durch den Abstand der Befestigungsschenkel der Räder 4 bestimmten freien Raum der Hinterachsbrücke 6 erstreckt.

Der Sammelbehälter 7 zur Aufnahme des Grasschnitts ist schwenkbar und abnehmbar auf das Oberteil der Hinterachsbrücke 6 mit Hilfe von Gelenkzapfen 8 montiert und weist ein offenes Vorderteil auf, dessen Querschnitt dem Durchgangsquerschnitt zwischen den Schenkeln der Brücke 6 in Form eines Portalrahmens entspricht, und sich an die Austrittsöffnung des Auswurfkanals des Mähwerkgehäuses 5, in unmittelbarer Nähe des Umlaufweges der Schnittmesser, anpasst. Der Sammelbehälter 7 ist ausserdem auf bekannte Weise mit einem Bedienungshandgriff 9 versehen, der das Kippen zum Zweck des Entleerens direkt von dem Fahrersitz aus ermöglicht.

Nach einem anderen Merkmal der Erfindung sind die Gelenkzapfen 8 des Sammelbehälters 7 zur Aufnahme des Grasschnitts abnehmbar in offenen Lagern 10 befestigt, die vertikal verschiebbar auf mit dem Oberteil der Hinterachsbrücke 6 fest verbundenen, vertikalen Befestigungseisen 11 geführt, und gleichzeitig in der vertikalen Verschiebung von dem Mähwerkgehäuse 5, mit Hilfe eines Verbindungsgestänges 12 (Figur 1 und 3) in Gang gesetzt werden. So werden während der Einstellung der Schnitthöhe die Gelenkzapfen 10 gleichzeitig und in gleicher Richtung wie das Mähwerkgehäuse 5 verschoben, so dass der Sammelbehälter 7 immer genau mit dem besagten Mähwerkgehäuse 5 ausgerichtet ist. Die obere Position des Mähwerkgehäuses 5 und des Sammelbehälters 7 ist, beispielsweise, in feiner, strichpunktierter Linie auf der Figur 1 dargestellt.

Nach einem anderen, erfindungsgemässen Merkmal, das auf den beigefügten Zeichnungen nicht dargestellt ist, sind die Gelenkzapfen 8 des Sammelbehälters 7 zur Aufnahme des Grasschnitts abnehmbar in mit dem Mähwerkgehäuse 5 fest verbundenen, offenen Lagern 10 montiert.

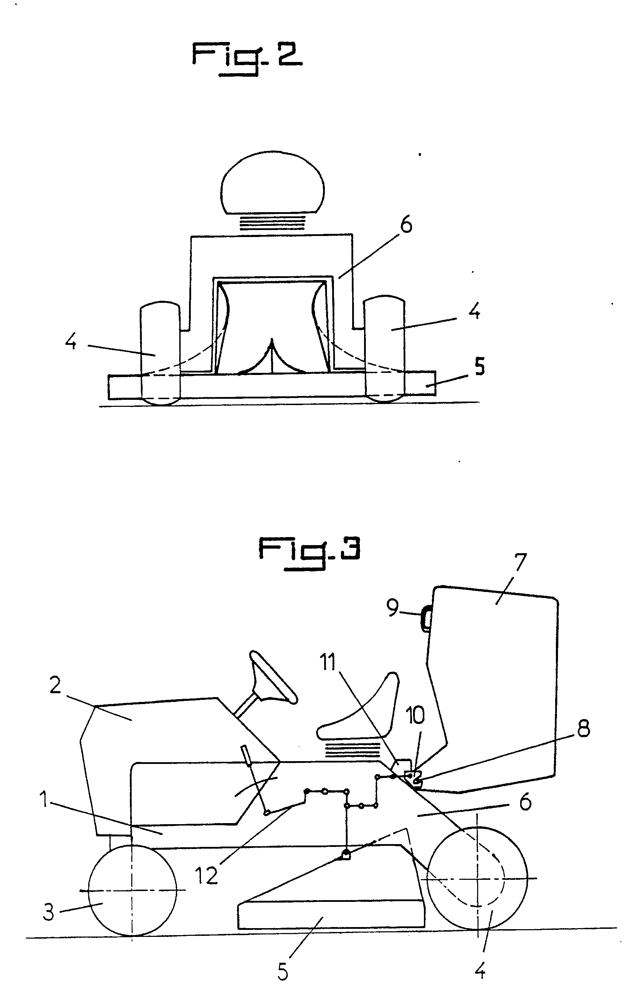

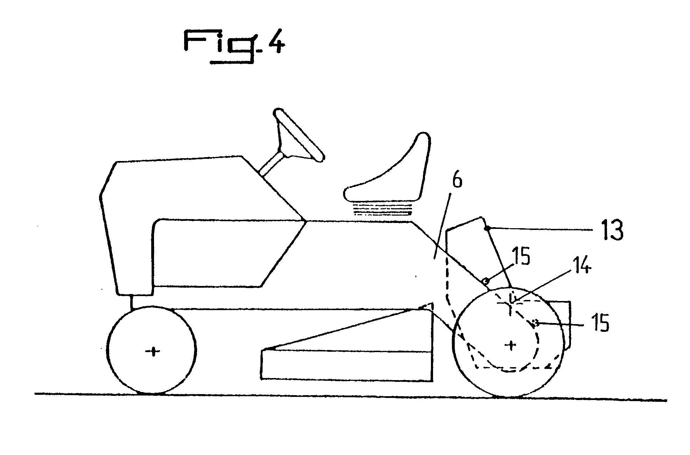

Nach einem weiteren, erfindungsgemässen Merkmal, das auf Figur 4 dargestellt ist, kann der Rasenmäher mit Fahrersitz u.a. mit einer Transportmulde 13 ausgerüstet werden wenn kein Sammelbehälter 7 montiert ist. Eine bevorzugte Ausführungsform dieser Transportmulde 13 ist dadurch gekennzeichnet, dass :

- die Aufhängung der Transportmulde, mittels Drehlager 14, so angeordnet ist, dass der Schwerpunkt der geförderten Last unmittelbar auf die Antriebsräder einwirkt. Die Bodenhaftung, bzw. die Griffigkeit der Reifen, wird somit erhöht bei zunehmender Nutzlast, im Gegensatz zu den bekannten Vorrichtungen.
- durch einfaches Umschwenken der Vorrichtung, die Transportmulde als Ableitvorrichtung für das geschnittene Gras dienen kann.
- die Transportmulde in seiner Aufhängung drehend gelagert ist, und dass diese Lagerung so ausgelegt ist, dass die geförderte Last mit minimalem Kraftaufwand vom Benutzer, durch Kippen geleert werden kann.

Ausserdem, ist die Transportmulde 13 vorteilhaft, an mindestens einer Seitenfläche, mit Sperrmitteln (15) in Form von Arretiervorrichtungen versehen, die mit einem an der entsprechenden Stütze der Hinterachsbrücke 6, beweglichen Element entsprechender Form zusammenwirken, wobei die besagten Sperrmittel 15 vorteilhaft als einfache, an der Seite der Transportmulde 13 vorgesehene Löcher ausgeführt sind, und das bewegliche Element als Riegel oder dergleichen ausgebildet ist.

Dank der Erfindung ist es möglich, einen Rasenmäher mit Fahrersitz herzustellen, der ein direktes Aufnehmen des Grasschnitts mit grosser Wirksamkeit gewährleistet. Diese letztere wird insbesondere dadurch erreicht, dass eine Hinterachsbrücke 6 in Form eines Portalrahmens vorgesehen ist, der einen beträchtlichen Zwischenraum freilässt, welcher ausgenützt werden kann, um die Durchführung des Vorderteils des Sammelbehälters 7 und dessen Anschluss direkt an die Austrittsöffnung des Auswurfkanals des Mähwerkgehäuses 5 zu gewährleisten.

**Patentansprüche**

1. Rasenmäher mit Fahrersitz, im wesentlichen bestehend aus einem tragenden Chassis (1) das vorne mit einem Antriebsmotor (2), Leit-Vorderrädern (3), Antriebs-Hinterrädern (4), die auf eine Hinterachsbrücke (6) in Form eines Portalrahmens montiert sind und einem an der Unterseite befindlichen Mähwerkgehäuse (5) versehen ist, in welchem zwei gegenläufige, synchronisierte Schnittmesser angeordnet sind, dadurch gekennzeichnet, dass die Hinterachsbrücke (6) die Befestigung eines Sammelbehälters (7) zur Aufnahme des Grasschnitts, direkt an der Austrittsöffnung des Auswurfkanals des Mähwerkgehäuses (5) zwischen den Hinterrädern (4) ermöglicht, dass das Mähwerkgehäuse (5) so unter das Chassis (1) bei den Hinterrädern (4) montiert ist, dass die Austrittsöffnung ihres Auswurfkanals sich vollständig in den durch den Abstand der Befestigungsschenkel der Räder (4) bestimmten, freien Raum der Hinterachsbrücke (6) erstreckt und dass der Sammelbehälter (7) ein offenes Vorderteil aufweist, dessen Querschnitt dem Durchgangsquerschnitt zwischen den Schenkeln der Brücke (6) in Form eines Portalrahmens entspricht, und sich an die Austrittsöffnung des Auswurfkanals des Mähwerkgehäuses (5), in unmittelbarer Nähe des Umlaufweges der Schnittmesser anpasst.

2. Mäher nach Anspruch 1, dadurch gekennzeichnet, dass der Sammelbehälter (7) zur Aufnahme des Grasschnitts schwenkbar und abnehmbar auf das Oberteil der Hinterachsbrücke (6) mit Hilfe von Gelenkzapfen (8) montiert ist.

3. Mäher nach Anspruch 2, dadurch gekennzeichnet, dass die Gelenkzapfen (8) des Sammelbehälters (7) zur Aufnahme des Grasschnitts abnehmbar in offenen Lagern (10) befestigt sind, die vertikal verschiebbar auf mit dem oberen Teil der Brücke (6) fest verbundenen, vertikalen Befestigungseisen (11) geführt, und gleichzeitig in der vertikalen Verschiebung von dem Mähwerkgehäuse (5) mittels eines Verbindungsgestänges (12) in Gang gesetzt werden.

4. Mäher nach Anspruch 2, dadurch gekennzeichnet, dass die Gelenkzapfen (8) des Sammelbehälters (7) für die Aufnahme des Grasschnitts abnehmbar in mit dem Mähwerkgehäuse (5) fest verbundenen, offenen Lagern (10) montiert sind.

5. Mäher nach Anspruch 1, in seiner Verwendbarkeit so erweitert, dass anstelle des Sammelbehälters (7) der Raum zwischen den Hinterrädern (4) durch Zusatzgeräte wie z.B. eine Grasableitvorrichtung, eine Transportmulde, einen Düngerstreuer, ein Spritzgerät usw. genutzt wird, und dadurch gekennzeichnet, dass die Aufhängung dieser Zusatzgeräte, mittels Drehlager (14), so angeordnet ist, dass der Schwerpunkt der beförderten Last unmittelbar auf die Antriebsräder einwirkt.

6. Mäher nach Anspruch 5 dadurch gekennzeichnet, dass als Zusatzgerät eine Transportmulde angebracht wird, die durch einfaches Umschwenken als Ableitvorrichtung für das geschnittene Gras dienen kann wenn ohne Sammelvorrichtung gemäht wird.

7. Mäher nach einem der Ansprüche 5 und 6, dadurch gekennzeichnet, dass die Transportmulde (13) vorteilhaft, an mindestens einer Seitenfläche, mit Sperrmitteln (15) in Form von Arretiervorrichtungen versehen, die mit einem an der entsprechenden Stütze der Hinterachsbrücke (6), beweglichen Element entsprechender Form zusammenwirken, wobei die besagten Sperrmittel (15) vorteilhaft als einfache, an der Seite der Transportmulde (13) vorgesehenen Löcher ausgeführt sind, und das bewegliche Element als Riegel oder dergleichen ausgebildet ist.

**Claims**

1. A lawnmower with a driver's seat, consisting essentially of a load-bearing chassis (1) which, at the front, is provided with a drive motor (2), steerable front wheels (3), back driven wheels (4) mounted on a back axle assembly (6) in the form of a gantry, and a mowing unit housing (5) disposed on the underside and containing two contra-rotating synchronised cutting blades, characterised in that the back axle assembly (6) enables a collector (7) for the grass cuttings to be fixed directly on the exit aperture of the ejection duct of the mowing unit housing (5) between the back wheels (4), in that the mowing unit housing (5) is so mounted beneath the chassis (1) at the back wheels (4) that the exit aperture of its ejection duct extends completely into the free space of the back axle assembly (6) as defined by the distance between the fixing arms of the wheels (4), and in that the collector (7) has an open front part whose cross-section corresponds to the passage cross-section between the arms of the gantry assembly (6) and matches the exit aperture of the ejection duct of the mowing unit housing (5) in the immediate vicinity of the rotating trajectory of the cutting knives.

2. A mower according to claim 1, characterised in that the collector (7) for the grass cuttings is mounted on the top part of the back axle assembly (6) by means of pivot pins (8) so as to be pivotable and removable.

3. A mower according to claim 2, characterised in that the pivot pins (8) for the collector (7) for the grass cuttings are fixed removably in open bearings (10) which are guided to be vertically displaceable on vertical fixing members (11) rigidly connected to the top part of the back axle assembly (6), and are simultaneously actuated in the vertical displacement of the mower unit housing (5) by means of a connecting linkage (12).

4. A mower according to claim 2, characterised in that the pivot pins (8) of the collector (7) for the grass cuttings are removably mounted in open bearings (10) rigidly connected to the mowing unit housing (5).

5. A mower according to claim 1, the use of which is extended so that the space between the back wheels (4) is used, not by the collector (7), but by additional devices, such as, for example, a grass deflector, a transport bucket, a fertilizer spreader, a spray, and so on, and characterised in that the suspension of these additional devices is so arranged by means of bearings (14) that the centre of gravity of the conveyed load acts directly on the drive wheels.

6. A mower according to claim 5, characterised in that the additional device used is a transport bucket which, by simply pivoting, can act as a deflector for the cut grass when mowing is carried out without collecting means.

7. A mower according to claim 5 or 6, characterised in that the transport bucket (13) is advantageously provided, at one side surface at least, with locking means (15) in the form of retaining devices which cooperate with a movable element of corresponding shape on the corresponding support of the back axle assembly (6), the said locking means (15) advantageously being formed as simple holes provided at the side of the transport bucket (13) and the movable element being in the form of a latch or the like.

**Revendications**

1. Tondeuse à gazon autoportée, essentiellement constituée par un châssis porteur (1) muni d'un moteur d'entraînement (2) à l'avant, de roues avant directrices (3), de roues arrière motrices (4) qui sont montées sur un pont arrière (6) en forme de portique et d'un carter de coupe ventral (5) dans lequel sont montées deux lames contre-rotatives synchronisées, caractérisée en ce que le pont arrière (6) permet le montage d'un réceptacle (7) de réception de l'herbe coupée, directement sur l'orifice de sortie du canal d'éjection du carter de coupe (5) entre les roues arrière (4), en ce que le carter de coupe (5) est monté sous le châssis (1) près des roues arrière (4), de telle manière que l'orifice de sortie de son canal d'éjection s'étend entièrement dans l'espace libre du pont arrière (6) déterminée par l'écartement des bras de montage des roues (4) et en ce que le réceptacle (7) présente une partie antérieure ouverte, dont la section correspond à la section de passage entre les bras du pont (6) en forme de portique, et qui s'applique sur l'orifice de sortie, du canal d'éjection du carter de coupe (5), à proximité immédiate de la trajectoire des lames de coupe.

2. Tondeuse, suivant la revendication 1, caractérisée en ce que le réceptacle (7) de réception de l'herbe coupée est monté de manière basculante et amovible, sur la partie supérieure du pont arrière (6), au moyen de pivots (8).

3. Tondeuse, suivant la revendication 2, caractérisée en ce que les pivots (8) du réceptacle (7) de réception de l'herbe coupée sont montés de manière amovible dans des paliers ouvers (10), guidés de manière déplaçable verticalement sur des pattes verticales (11) solidaires de la partie supérieure du pont (6), et actionnés en translation verticale simultanément au carter de coupe (5) par l'intermédiaire d'une tringlerie de liaison (12).

4. Tondeuse, suivant la revendication 2, caractérisée en ce que les pivots (8) du réceptacle (7) de réception de l'herbe coupée sont montés de manière amovible dans des paliers ouverts (10), solidaires du carter de coupe (5).

5. Tondeuse, suivant la revendication 1, à utilisation plus large en ce sens qu'à la place du réceptacle de réception (7), l'espace entre les roues arrière (4) est utilisé pour des outils accessoires, tels que, par exemple, un déflecteur d'herbe, une benne de transport (13), un épandeur d'engrais, un pulvérisateur, etc., et caractérisée en ce que le montage de ces outils accessoires s'effectue au moyen de paliers (14) de telle manière que le centre de gravité de la charge transportée agit directement sur les roues motrices.

6. Tondeuse, suivant la revendication 5, caractérisée en ce que comme outil accessoire est montée une benne de transport, qui peut servir de déflecteur pour l'herbe coupée, par simple basculement, dans le cas d'une tonte sans dispositif de réception.

7. Tondeuse, suivant l'une quelconque des revendications 5 et 6, caractérisée en ce que la benne de transport (13) est avantageusement munie, sur au moins une face latérale, de moyens (15) de verrouillage, sous forme d'arrêts, coopérant avec un élément mobile de forme correspondante prévu sur le montant correspondant du portique formant le pont arrière (6) de la tondeuse, lesdits moyens de verrouillage (15) étant avantageusement réalisés sous forme de simples trous prévus dans la face de la benne (13), et l'élément mobile étant réalisé sous forme d'un verrou, ou analogue.

Fig.1

# Fig. 2

# Fig. 3

Fig. 4

EP 0 254 657 B1